# FASCICULE DE BREVET EUROPEEN

(11) **EP 1 927 500 B1**
(45) Date de publication et mention de la délivrance du brevet: **15.02.2012**
(21) Numéro de dépôt: 07301563.8
(22) Date de dépôt: 21.11.2007
(51) Int. Cl.: B60N 2/015

(54) **Ensemble intérieur de véhicule automobile, armature de siège et procédé de montage associés**
Fahrzeuginnenraum, Sitzgestell und Montageverfahren
Interior assembly of an automobile, seat frame and associated assembly method

(30) Priorité: 29.11.2006 FR 0655188
(43) Date de publication de la demande: 04.06.2008
(73) Titulaire: PEUGEOT CITROËN AUTOMOBILES S.A., 78140 Vélizy Villacoublay (FR)
(72) Inventeur: Combeau, Frédéric, 25750 Desandans (FR); Martinez, Alexandre, 90000 Belfort (FR)

(56) Documents cités:
- EP-A1- 0 442 765
- FR-A1- 2 751 595
- FR-A1- 2 794 821

## Description

La présente invention concerne un ensemble intérieur de véhicule automobile, du type comprenant :
- un plancher ;
- une armature de siège comportant une ossature supérieure de support d'une assise et au moins un support inférieur d'ossature, le support inférieur étant destiné à être fixé sur le plancher et présentant au moins un orifice de passage d'un organe de fixation du support inférieur dans le plancher.

On connaît un ensemble intérieur du type précité, comprenant une armature de siège de véhicule fixée sur le plancher du véhicule. L'armature comprend une ossature supérieure de support d'une assise et des supports inférieurs de l'ossature fixés sur le plancher. Ces supports sont constitués par des glissières longitudinales recevant à coulissement des pieds de l'ossature. Nous connaissons notamment le document FR 2 751595 qui décrit un ensemble intérieur de véhicule automobile comprenant des moyens de prémaintien présentant un organe d'encliquetage coaxial avec une lumière centrale de passage d'un organe de fixation dans le plancher du véhicule. Le document EP 0 442595 décrit un ensemble intérieur de véhicule automobile comprenant un plancher et une armature de siège destinée à être fixée simplement sur le plancher par une vis de fixation.

Dans certains véhicules, l'armature porte un dossier, et une assise formée par un coussin monté mobile par rapport au dossier entre une position inférieure d'utilisation et une position supérieure dite « cinéma », dans laquelle le coussin est plaqué contre une partie supérieure du dossier. Dans cette position de montage, le dossier et le coussin sont inclinés vers l'arrière du véhicule, à l'arrière de l'extrémité arrière des glissières. Le dossier et le coussin étant relativement lourds par rapport aux glissières, le centre de gravité du siège est déporté à l'arrière et en dessous du dossier, de sorte que le siège tend à basculer vers l'arrière lorsqu'il est introduit dans le véhicule lors du montage.

Pour pallier ce problème, le monteur doit maintenir le siège en position lors de la fixation définitive du siège sur le plancher, ce qui est mal aisé, voire impossible lorsque plusieurs sièges doivent être maintenus simultanément lors du montage. Dans ce cas, les garnitures latérales des flancs du véhicule peuvent être utilisées comme supports de maintien. Toutefois, ceci implique la protection des garnitures, ce qui augmente le coût du montage.

Un but de l'invention est donc d'obtenir un ensemble intérieur de véhicule automobile, présentant une armature de siège avec un centre de gravité déporté vers l'arrière, tout en étant facile et peu onéreux à monter.

A cet effet, l'invention a pour objet un ensemble intérieur du type précité, caractérisé en ce que l'ensemble intérieur comprend des moyens de pré-maintien en position de l'armature avant sa fixation sur le plancher, les moyens de pré-maintien comprenant :
- au moins un organe d'encliquetage solidaire de l'un du support inférieur et du plancher, et
- un passage de réception du ou de chaque organe d'encliquetage ménagé dans l'autre du support inférieur et du plancher, l'organe d'encliquetage étant destiné à être engagé dans le passage de réception pour maintenir en position l'armature sur le plancher en l'absence d'organe de fixation dans le ou dans chaque orifice de passage, et en ce que les-moyens de prémaintien comprennent une bague définissant une lumière centrale s'étendant en regard de l'orifice de passage de l'organe de fixation ,et une oreille latérale, l'organe d'encliquetage faisant saillie à partir de l'oreille latérale, à l'écart transversalement à l'axe de la bague.

L'ensemble intérieur selon l'invention peut comprendre l'une ou plusieurs des caractéristiques suivantes, prise(s) isolément ou suivant toute(s) combinaison(s) techniquement possible(s) :
- le ou chaque support inférieur est une glissière, l'ossature étant montée coulissante dans la ou chaque glissière ;
- les moyens de pré-maintien comprennent une cale rapportée sous le support inférieur, la cale délimitant au moins une lumière de passage de l'organe de fixation s'étendant en regard de l'orifice de passage, l'organe d'encliquetage étant solidaire de l'un de la cale et du plancher, le passage de réception étant ménagé dans l'autre de la cale et du plancher ;

- la cale comprend un corps en matière plastique et une bague de renfort métallique insérée dans le corps, la bague de renfort délimitant la lumière de passage de l'organe de fixation ;
- le ou chaque support présente une extrémité avant et une extrémité arrière, l'ossature étant apte à faire saillie vers le haut au voisinage de l'une desdites extrémités, les moyens de pré-maintien étant placés au voisinage de l'autre desdites extrémités ;
- l'armature présente un centre de gravité s'étendant à l'arrière et à l'écart du ou de chaque support inférieur ;
- il comprend pour le ou chaque orifice de passage, un organe de fixation engagé dans l'orifice de passage et fixé dans le plancher.

L'invention a en outre pour objet une armature de siège de véhicule automobile, du type comprenant :
- une ossature supérieure de support d'une assise et au moins un support inférieur d'ossature, le support inférieur étant destiné à être fixé sur un plancher du véhicule automobile, et présentant au moins un orifice de passage d'un organe de fixation du support inférieur dans le plancher,
caractérisée en ce qu'elle comprend au moins un organe d'encliquetage solidaire du support inférieur et destiné à être reçu dans un passage de réception ménagé dans le plancher pour maintenir l'armature en position sur le plancher en l'absence d'organe de fixation dans le ou dans chaque orifice de passage et en ce qu'elle comprend une bague définissant une lumière centrale s'étendant en regard de l'orifice de passage de l'organe de fixation et une oreille latérale, l'organe d'encliquetage faisant saillie à partir de l'oreille latérale à l'écart transversalement de l'axe de la bague.

L'invention a également pour objet un procédé de montage d'un ensemble intérieur de véhicule automobile, caractérisé en ce qu'il comprend les étapes suivantes :
- fourniture d'un plancher de véhicule automobile, et d'une armature de siège, l'armature comportant :
- une ossature supérieure de support d'une assise,
- au moins un support inférieur d'ossature destiné à être fixé sur le plancher et présentant au moins un orifice de passage d'un organe de fixation du support dans le plancher,
- fourniture de moyens de pré-maintien en position solidaire de l'armature avant sa fixation sur le plancher, les moyens de pré-maintien comprenant au moins un organe d'encliquetage solidaire de l'un du support inférieur et du plancher, et un passage de réception du ou de chaque organe d'encliquetage ménagé dans l'autre du support inférieur et du plancher ;
- application du support inférieur sur le plancher ;
- engagement du ou de chaque organe d'encliquetage dans un passage de réception, en l'absence d'organe de fixation dans le ou dans chaque orifice de passage ; puis
- fixation d'un organe de fixation à travers le ou chaque orifice de passage et le plancher.

L'invention sera mieux comprise à la lecture de la description qui va suivre, donnée uniquement à titre d'exemple, et faite en se référant aux dessins annexés, sur lesquels :
- la Figure 1 est une vue de côté d'un premier ensemble intérieur de véhicule automobile selon l'invention ;
- la Figure 2 est une vue en perspective de dessous d'une cale de pré-maintien d'un siège de l'ensemble de la Figure 1 sur le plancher ;
- la Figure 3 est une vue en coupe partielle suivant un plan vertical longitudinal des moyens de pré-maintien de l'ensemble de la Figure 1 dans une configuration ou l'ensemble intérieur est fixé; et
- la Figure 4 est une coupe suivant un plan vertical transversal des moyens de pré-maintien de l'ensemble de la Figure 1.

Dans tout ce qui suit, les orientations sont les orientations habituelles d'un véhicule automobile. Ainsi, les termes « avant », « arrière », « supérieur », « inférieur », « transversal », « longitudinal », « gauche », « droit », « haut », « bas » s'entendent par rapport au sens normal de circulation d'un véhicule automobile et à la position d'un conducteur.

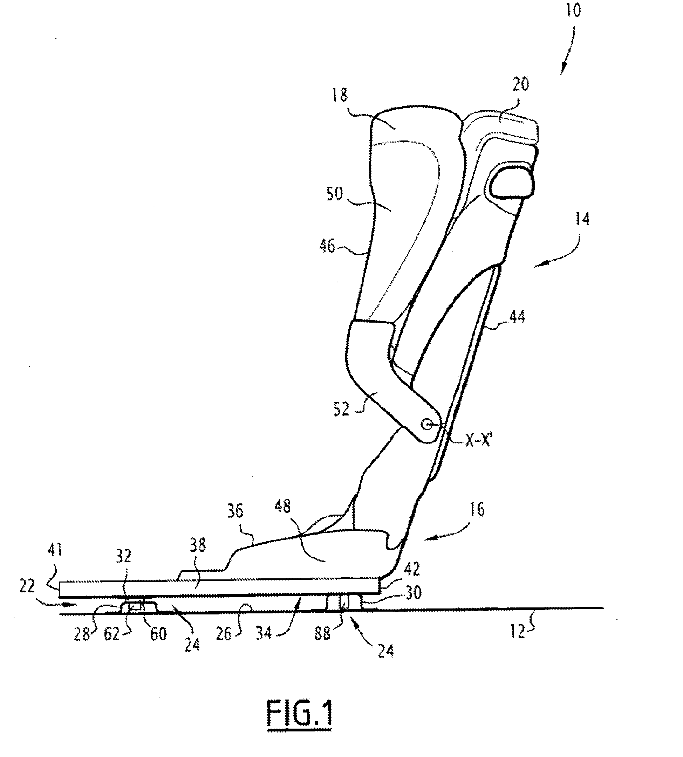

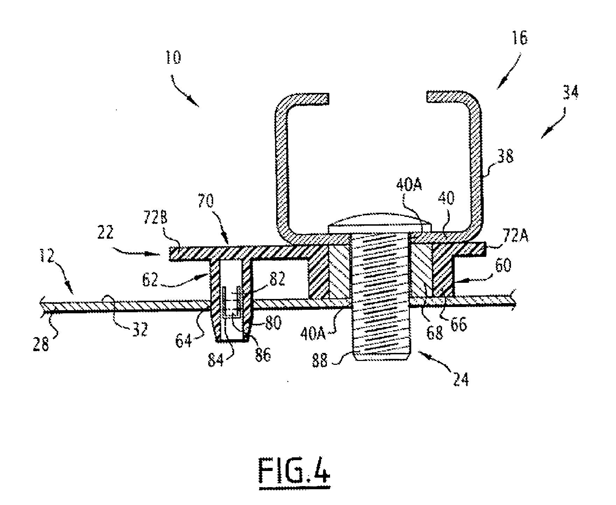

Un premier ensemble intérieur 10 de véhicule automobile selon l'invention est représenté sur les Figures 1 à 4. Cet ensemble intérieur 10 comprend un plancher 12 du véhicule automobile, un siège 14 comprenant une armature 16, ainsi qu'une assise 18 et un dossier 20 portés par l'armature 16.

Selon l'invention, l'ensemble intérieur 10 comprend en outre des moyens 22 de pré-maintien de l'armature 16 sur le plancher 12 lors du montage du siège 14, et des organes 24 de fixation définitive de l'armature 16 sur le plancher 12.

Comme illustré par la Figure 1, le plancher 12 comprend une base 26 sensiblement plane, et deux profilés avant 28 et arrière 30 de support de l'armature.

Les profilés 28, 30 s'étendent transversalement sur toute la largeur du siège 14. Ils font saillie vers le haut à partir de la base 26. Chaque profilé 28, 30 présente une surface supérieure 32 d'appui de l'armature 16.

L'armature 16 comprend deux supports inférieurs 34 formés par des glissières longitudinales parallèles, et une ossature supérieure 36 montée mobile longitudinalement dans les glissières 34.

Chaque glissière 34 est formée par un rail 38 de section transversale sensiblement en forme de U s'ouvrant vers le haut.

Chaque rail 38 présente une paroi inférieure 40 fixée à l'arrière sur le profilé arrière 30 et fixée à l'avant sur les moyens de pré-maintien 32, au-dessus du profilé avant 28. La paroi inférieure 40 délimite en regard de chaque profilé 28, 30, un orifice 40A de passage d'un organe de fixation 24.

Chaque rail 38 s'étend entre une extrémité avant 41 située à l'avant du profilé avant 28 et une extrémité arrière 42 située à l'arrière du profilé arrière 28.

L'ossature supérieure 36 comprend un support 44 de dossier, un support 46 d'assise monté pivotant par rapport au support de dossier 44 et deux pieds parallèles 48 de déplacement de l'ossature 36 dans les rails 38.

Le support de dossier 44 est incliné vers l'arrière d'un angle supérieur à 10° par rapport à un plan vertical transversal. Il comprend deux montants (non représentés) raccordés inférieurement chacun à un pied 48.

Le support 44 porte le dossier 20 et éventuellement un appui-tête (non représenté).

Le support d'assise 46 comprend une base inférieure 50 et deux bras de liaison 52 au support de dossier 44. Les bras 52 sont articulés transversalement de part et d'autre du support 44, sensiblement dans une partie médiane de ce support.

Le support d'assise 46 est ainsi mobile autour d'un axe transversale X-X' entre une position inférieure d'utilisation, dans laquelle la base 50 repose horizontalement sur les pieds 36, et une position supérieure de montage, dans laquelle la base 50 est disposée en appui vers le haut contre une partie supérieure du dossier 20, parallèlement au support de dossier 44.

Cette position supérieure est parfois dénommée « position cinéma ».

Les pieds 48 s'étendent horizontalement dans les rails 38 à l'avant du support de dossier 44. Ils sont montés mobiles à coulissement le long d'un axe longitudinal dans les rails 38.

L'ossature 36 est ainsi déplaçable conjointement avec l'assise 18 et le dossier 20 dans les glissières 34 entre une position arrière représentée sur la Figure 1 et une position avant.

Dans la position arrière, les pieds 48 sont en butée arrière à l'extrémité arrière 42. Le support de dossier 44 fait alors saillie vers l'arrière au-delà de l'extrémité 42 et le centre de gravité de l'ossature 36 est situé sous le support 44, longitudinalement à l'arrière de l'extrémité arrière 42.

Lorsque le support d'assise 46 occupe sa position supérieure et que le support de dossier 44 est dans sa position arrière, l'ensemble formé par l'ossature 16 et les glissières 34 est donc apte à basculer spontanément vers l'arrière, quand cet ensemble est placé à l'écart des profilés 30, 32.

Les moyens de pré-maintien 22 sont interposés entre la paroi inférieure 40 du rail 38 et la surface supérieure 32 d'appui du profilé avant 28.

Les moyens de pré-maintien 22 comprennent pour chaque rail 38, une cale 60 rapportée sous le rail 38, un pion d'encliquetage 62 solidaire de la cale 60, et un passage 64 de réception du pion 62, ménagé dans le profilé avant 28.

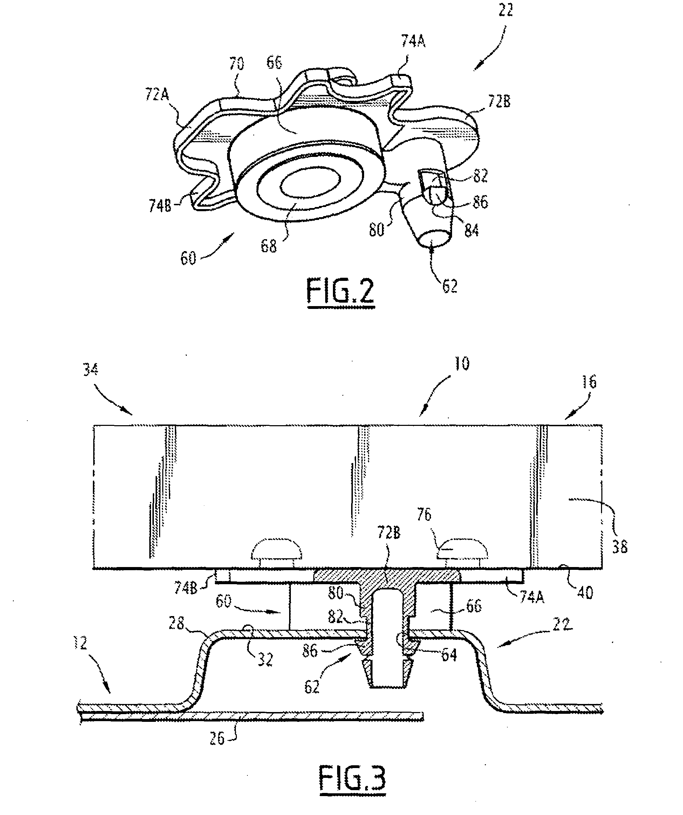

Comme illustré par la Figure 2, la cale 60 comprend un manchon extérieur 66 cylindrique d'axe vertical, une bague métallique intérieure 68 coaxiale avec le manchon 66, et une plaque supérieure d'appui 70.

Le manchon 66 et la plaque 70 sont venues de matière et sont par exemple réalisés à base d'une matière plastique comme un ABS.

La bague métallique 68 est montée coaxialement dans le manchon 66. Elle affleure le manchon 66 en haut et en bas. La bague 68 présente une lumière centrale d'axe vertical s'étendant en regard de l'orifice de passage 40A ménagé dans la paroi inférieure 40 du rail 38.

La plaque 70 prolonge le manchon 66 radialement à l'écart de son axe vertical. Elle définit deux oreilles transversales gauche et droite 72A, 72B, et deux pattes avant et arrière 74A et 74B.

La plaque supérieure 70 définit avec le manchon 66 et l'insert 68 une surface supérieure plane de fixation sur le rail 38.

Comme illustré par la Figure 3, le rail 38 s'appuie longitudinalement sur les pattes 74A, 74B et est fixé sur ces pattes par des rivets 76.

Le pion d'encliquetage 62 fait saillie verticalement vers le bas à partir d'une oreille 70B latérale, à l'écart transversalement de l'axe du manchon 66.

Le pion 62 comprend un corps central creux 80 et deux pattes latérales 82 d'encliquetage longitudinal.

Le corps 80 présente une forme tubulaire, qui converge vers le bas à son extrémité inférieure. Il définit à l'avant et à l'arrière deux fenêtres axiales 84 de passage des pattes d'encliquetage 82.

Chaque patte 82 est fixée sur le corps 80 suivant un bord supérieur d'une fenêtre 84. Chaque patte 82 comprend une tête inférieure d'encliquetage 86 disposée dans la fenêtre 84.

Chaque patte 82 est mobile radialement dans la fenêtre 84 par rapport au corps creux 80, entre une position intérieure rétractée dans le corps 80, et une position extérieure dans laquelle les têtes 86 font saillie en dehors du corps 80. Lorsque les pattes 82 sont insérées dans les passages de réception 64, les têtes 86 sont en appui sous le profilé 28 autour du passage 64.

Les passages de réception 64 débouchent dans la surface supérieure 32 du profilé avant 28. Ils présentent une section horizontale sensiblement égale à la section extérieure du corps 80.

Les organes de fixation 24 sont formés par des vis 88 vissées dans le profilé avant 28 et dans le profilé arrière 30 du plancher.

Chaque vis 88 fixée dans le profilé avant 28 est engagée à travers l'orifice de passage 40A de la paroi inférieure 40, à travers la lumière centrale de la bague 68 et est insérée à travers la surface supérieure 32 du profilé 28. La paroi 40 de chaque rail 38 et la cale 60 rapportée sous la paroi 40 sont ainsi enserrées entre une tête de la vis 88 et la surface supérieure d'appui 32 du profilé 28.

Le procédé de montage de l'ensemble intérieur 10 va maintenant être décrit.

Initialement, une armature 16 formée par une ossature supérieure 36 et des glissières inférieures 34 montées à demeure sous l'ossature 36, est fournie.

Les cales 60 de support sont fixées à demeure sous les rails 38 des supports 34 et portent les pions d'encliquetage 62.

Pour faciliter le montage, le support d'assise 46 est placé dans sa position supérieure dite « cinéma », plaqué contre le support de dossier 44. Par ailleurs, l'ossature supérieure 36 est placée dans sa position arrière afin de dégager l'espace situé entre les rails 38 à l'avant de l'armature 16.

Puis, l'armature 16 est introduite dans cette configuration à l'intérieur du véhicule et est placée en appui sur les profilés 28, 30.

Pour empêcher le basculement vers l'arrière de l'armature 16 lors du montage, chaque pion d'encliquetage 62 est placé en regard d'un passage de réception 64 ménagé dans le profilé 28.

Les pions 62 sont alors introduits dans les passages de réception 64. Lors de cette introduction, les pattes d'encliquetage 82 se déplacent de leur position déployée vers leur position escamotée, puis reprennent leur position déployée dans laquelle les têtes 84 sont engagées sous le profilé 28.

Les pattes 82 assurent ainsi un pré-maintien des supports 34 sur les profilés 28, 30, en l'absence d'organes de fixation 24 dans les orifices de passage 40A. Ainsi, les cales 60 sont maintenues en appui contre le profilé avant 28, et l'ossature 16 ne bascule pas vers l'arrière, malgré le maintien du support de dossier 44 dans sa position supérieure.

Il n'est pas nécessaire pour l'opérateur ou le robot de montage d'assurer un maintien de l'armature 16 pour empêcher son pivotement vers l'arrière. Il n'est pas non plus nécessaire de prévoir un tel maintien sur les garnitures latérales des flancs du véhicule, ce qui facilite considérablement le procédé de montage et diminue son coût.

Il est ainsi possible de maintenir en position plusieurs armatures 16 sur le plancher 12 du véhicule, avant de fixer définitivement ces armatures 16 sur le plancher 12 par les organes de fixation 24.

L'opérateur ou le robot de montage introduit ensuite les vis de fixation 88 dans les orifices de passage 40A et dans les lumières centrales des bagues 68 et visse les vis 88 dans le profilé 28 pour fixer définitivement les glissières 34 sur le profilé 28.

En variante, les pions d'encliquetage 62 sont solidaires du profilé 28, et des passages de réception 64 correspondants sont ménagés dans les cales 60 ou directement dans les glissières 34.

## Revendications

1. Ensemble intérieur (10) de véhicule automobile, du type comprenant :
- un plancher (12) ;
- une armature (16) de siège comportant une ossature supérieure (36) de support d'une assise (18) et au moins un support inférieur (34) d'ossature, le support inférieur (34) étant destiné à être fixé sur le plancher (12) et présentant au moins un orifice (40A) de passage d'un organe de fixation (24) du support inférieur (34) dans le plancher (12) ;
l'ensemble intérieur (10) comprenant des moyens (22) de pré-maintien en position de l'armature (16) avant sa fixation sur le plancher (12), les moyens de pré-maintien (22) comprenant :
- au moins un organe d'encliquetage (62) solidaire du support inférieur (34) et du plancher (12), et
- un passage de réception (64) du ou de chaque organe d'encliquetage (62) ménagé dans le support inférieur (34) et du plancher (12), l'organe d'encliquetage (62) étant destiné à être engagé dans le passage de réception (64) pour maintenir en position l'armature (16) sur le plancher (12) en l'absence d'organe de fixation (24) dans chaque orifice de passage (40A), **caractérisé en ce que** les moyens de pré-maintien (22) comprennent une bague (68) définissant une lumière centrale s'étendant en regard de l'orifice de passage de l'organe de fixation (24), et une oreille latérale (70B), l'organe d'encliquetage (62) faisant saillie à partir de l'oreille latérale (70B), à l'écart transversalement de l'axe de la bague (68).

2. Ensemble (10) selon la revendication 1, **caractérisé en ce que** le ou chaque support inférieur (34) est une glissière, l'ossature (36) étant montée coulissante dans la ou chaque glissière (34).

3. Ensemble (10) selon l'une des revendications 1 ou 2, **caractérisé en ce que** les moyens de pré-maintien (22) comprennent une cale (60) rapportée sous le support inférieur (34), la cale (60) délimitant au moins une lumière de passage de l'organe de fixation (24) s'étendant en regard de l'orifice de passage (40A), l'organe d'encliquetage (62) étant solidaire de l'un de la cale (60) et du plancher (12), le passage de réception (64) étant ménagé dans l'autre de la cale (60) et du plancher (12).

4. Ensemble (10) selon la revendication 3, **caractérisé en ce que** la cale (60) comprend un corps (66, 70) en matière plastique et une bague de renfort (68) métallique insérée dans le corps (66, 70), la bague de renfort (68) délimitant la lumière de passage de l'organe de fixation (24).

5. Ensemble (10) selon l'une quelconque des revendications précédentes, **caractérisé en ce que** le ou chaque support (34) présente une extrémité avant (41) et une extrémité arrière (42), l'ossature (36) étant apte à faire saillie vers le haut au voisinage de l'une desdites extrémités (41, 42), les moyens de pré-maintien (22) étant placés au voisinage de l'autre desdites extrémités (41, 42).

6. Ensemble (10) selon l'une quelconque des revendications précédentes, **caractérisé en ce que** l'armature (16) présente un centre de gravité s'étendant à l'arrière et à l'écart du ou de chaque support inférieur (34).

7. Ensemble (10) selon l'une quelconque des revendications précédentes, **caractérisé en ce qu'**il comprend pour le ou chaque orifice de passage (40A), un organe de fixation (24) engagé dans l'orifice de passage (40A) et fixé dans le plancher (12).

8. Armature (16) de siège de véhicule automobile, du type comprenant une ossature supérieure (36) de support d'une assise et au moins un support inférieur (34) d'ossature, le support inférieur (34) étant destiné à être fixé sur un plancher (12) du véhicule automobile, et présentant au moins un orifice (40A) de passage d'un organe de fixation (24) du support inférieur (34) dans le plancher (12),
comprenant au moins un organe d'encliquetage (62) solidaire du support inférieur (34) et destiné à être reçu dans un passage de réception (64) ménagé dans le plancher (12) pour maintenir l'armature (16) en position sur le plancher (12) en l'absence d'organe de fixation (24) dans le ou dans chaque orifice de passage (40A), **caractérisé en ce qu'**elle comprend une bague définissant une lumière centrale
s'étendant en regard de l'orifice de passage de l'organe de fixation et une oreille latérale (70B), l'organe d'encliquetage (62) faisant saillie à partir de l'oreille latérale à l'écart (70B) transversalement de l'axe de la bague (68).

9. Procédé de montage d'un ensemble intérieur (10) de véhicule automobile, comprenant les étapes suivantes :
- fourniture d'un plancher (12) de véhicule automobile, et d'une armature de siège (16), l'armature (16) comportant :
- une ossature supérieure (36) de support d'une assise (18),
- au moins un support inférieur (34) d'ossature destiné à être fixé sur le plancher (12) et présentant au moins un orifice de passage (40A) d'un organe de fixation (24) du support (34) dans le plancher (12),
- fourniture de moyens de pré-maintien (22) en position solidaire de l'armature (16) avant sa fixation sur le plancher (12), les moyens de pré-maintien (22) comprenant au moins un organe d'encliquetage (62) solidaire de l'un (34) du support inférieur (34) et du plancher (12), et un passage de réception (64) du ou de chaque organe d'encliquetage (62) ménagé dans l'autre (12) du support inférieur (34) et du plancher (12);
**caractérisé en ce que** les moyens de prémaintien comprennent une bague définissant
une lumière centrale s'étendant en regard de l'orifice de passage de l'organe de fixation et une oreille latérale (70B), l'organe d'encliquetage (62) faisant saillie à partir de l'oreille latérale à l'écart tranversalement de l'axe de la bague (68),
- application du support inférieur (34) sur le plancher (12);
- engagement du ou de chaque organe d'encliquetage (62) dans un passage de réception (64), en l'absence d'organe de fixation (24) dans le ou dans chaque orifice de passage (40A) ; puis
- fixation d'un organe de fixation (24) à travers le ou chaque orifice de passage (40A) et le plancher (12).

## Claims

1. Inner assembly (10) for a motor vehicle, of the type comprising:
- a floor (12);
- a seat frame (16) comprising an upper framework (36) for supporting a seat base (18) and at least a framework lower support (34), the lower support (34) being intended to be fixed to the floor (12) and having at least a through-hole (40A) for a member (24) for fixing the lower support (34) in the floor (12);
the inner assembly (10) comprising means (22) for pre-holding the frame (16) in position before it is fixed to the floor (12), the pre-holding means (22) comprising:
- at least a locking member (62) connected to the lower support (34) and the floor (12), and
- a passage (64) for receiving the or each locking member (62) provided in the lower support (34) and the floor (12), the locking member (62) being intended to be engaged in the receiving passage (64) so as to hold the frame (16) in position on the floor (12) in the absence of a fixing member (24) in each through-hole (40A), **characterised in that** the pre-holding means (22) comprise a ring (68) defining a central opening extending opposite the through-hole for the fixing member (24), and a side ear (70B), the locking member (62) projecting from the side ear (70B) with transverse spacing from the axis of the ring (68).

2. Assembly (10) according to claim 1, **characterised in that** the or each lower support (34) is a guide rail, the framework (36) being mounted in the or each guide rail (34) in a sliding manner.

3. Assembly (10) according to either claim 1 or claim 2, **characterised in that** the pre-holding means (22) comprise a spacer (60) inserted under the lower support (34), the spacer (60) limiting at least a through-opening for the fixing member (24) extending opposite the through-hole (40A), the locking member (62) being connected to one of the spacer (60) and the floor (12), the receiving passage (64) being provided in the other of the spacer (60) and the floor (12).

4. Assembly (10) according to claim 3, **characterised in that** the spacer (60) comprises a plastics material body (66, 70) and a metal reinforcing ring (68) inserted into the body (66, 70), the reinforcing ring (68) limiting the through-opening for the fixing member (24).

5. Assembly (10) according to any one of the preceding claims, **characterised in that** the or each support (34) has a front end (41) and a rear end (42), the framework (36) being able to project upwards in the vicinity of one of said ends (41, 42), the pre-holding means (22) being positioned in the vicinity of the other of said ends (41, 42).

6. Assembly (10) according to any one of the preceding claims, **characterised in that** the frame (16) has a centre of gravity extending behind and with spacing from the or each lower support (34).

7. Assembly (10) according to any one of the preceding claims, **characterised in that** it comprises, for the or each through-hole (40A), a fixing member (24) engaged in the through-hole (40A) and fixed in the floor (12).

8. Seat frame (16) for a motor vehicle, of the type comprising an upper framework (36) for supporting a seat base and at least a framework lower support (34), the lower support (34) being intended to be fixed to the floor (12) and having at least a through-hole (40A) for a member (24) for fixing the lower support (34) in the floor (12),
comprising at least a locking member (62) connected to the lower support (34) and intended to be received in a receiving passage (64) provided in the floor (12) so as to hold the frame (16) in position on the floor (12) in the absence of a fixing member (24) in the or each through-hole (40A), **characterised in that** it comprises a ring defining a central opening extending opposite the through-hole for the fixing member and a side ear (70B), the locking member (62) projecting from the side ear (70B) with transverse spacing from the axis of the ring (68).

9. Method for mounting an inner assembly (10) for a motor vehicle, comprising the following steps:
- providing a motor vehicle floor (12) and a seat frame (16), the frame (16) comprising:
- an upper framework (36) for supporting a seat base (18),
- at least a framework lower support (34) intended to be fixed to the floor (12) and having at least a through-hole (40A) for a member (24) for fixing the support (34) in the floor (12),
- providing means (22) for pre-holding the frame (16) in a connected position before it is fixed to the floor (12), the pre-holding means (22) comprising at least a locking member (62) connected to one (34) of the lower support (34) and the floor (12), and a passage (64) for receiving the or each locking member (62) provided in the other (12) of the lower support (34) and the floor (12); **characterised in that** these pre-holding means comprise a ring defining a central opening extending opposite the through-hole for the fixing member and a side ear (70B), the locking member (62) projecting from the side ear with transverse spacing from the axis of the ring (68),
- applying the lower support (34) to the floor (12);
- engaging the or each locking member (62) in a receiving passage (64), in the absence of a fixing member (24) in the or each through-hole (40A); then
- fixing a fixing member (24) through the or each through-hole (40A) and the floor (12).

## Patentansprüche

1. Innenanordnung (10) für Kraftfahrzeug, vom Typ umfassend:
- einen Boden (12);
- einen Sitzrahmen (16) mit einem oberen Traggerüst (36) für eine Sitzfläche (18) und mindestens einem unteren Gerüstträger (34), wobei der untere Träger (34) für die Befestigung auf dem Boden (12) vorgesehen ist und mindestens eine Öffnung (40A) für den Durchlass eines Organs (24) zur Befestigung des unteren Trägers (34) in dem Boden (12) aufweist;
wobei die Innenanordnung (10) Mittel (22) umfasst zum Vorhalten des Rahmens (16) in Position vor seiner Befestigung auf dem Boden (12), wobei die Vorhaltemittel (22) Folgendes umfassen:
- mindestens ein Einrastorgan (62), das mit dem unteren Träger (34) und dem Boden (12) fest verbunden ist, und
- einen Aufnahmedurchlass (64) für das oder jedes Einrastorgan (62), der in dem unteren Träger (34) ausgebildet ist, und für den Boden (12), wobei das Einrastorgan (62) dafür vorgesehen ist, in den Aufnahmedurchlass (64) einzugreifen, um den Rahmen (16) auf dem Boden (12) in Position zu halten, wenn ein Befestigungsorgan (24) in jeder Durchlassöffnung (40A) nicht vorhanden ist,
**dadurch gekennzeichnet, dass** die Vorhaltemittel (22) einen Ring (68), der einen mittigen Schlitz festlegt, der sich der Durchlassöffnung für das Befestigungsorgan (24) gegenüber erstreckt, und eine seitliche Öse (70B) umfassen, wobei das Einrastorgan (62) in Querrichtung abseits von der Achse des Ringes (68) über die seitliche Öse (70B) vorspringt.

2. Anordnung (10) nach Anspruch 1, **dadurch gekennzeichnet, dass** der oder jeder untere Träger (34) eine Gleitschiene ist, wobei das Gerüst (36) in der oder in jeder Gleitschiene (34) verschiebbar montiert ist.

3. Anordnung (10) nach einem der Ansprüche 1 oder 2, **dadurch gekennzeichnet, dass** die Vorhaltemittel (22) eine Einlage (60) umfassen, die unter dem unteren Träger (34) angebracht ist, wobei die Einlage (60) mindestens einen Durchlassschlitz für das Befestigungsorgan (24) begrenzt, der sich der Durchlassöffnung (40A) gegenüber erstreckt, wobei das Einrastorgan (62) mit einem von der Einlage (60) und dem Boden (12) fest verbunden ist, wobei der Aufnahmedurchlass (64) in dem anderen von der Einlage (60) und dem Boden (12), ausgebildet ist.

4. Anordnung (10) nach Anspruch 3, **dadurch gekennzeichnet, dass** die Einlage (60) einen Körper (66, 70) aus Kunststoff und einen metallischen Verstärkungsring (68) umfasst, der in den Körper (66, 70) eingesetzt ist, wobei der Verstärkungsring (68) den Durchlassschlitz für das Befestigungsorgan (24) begrenzt.

5. Anordnung (10) nach einem der vorhergehenden Ansprüche, **dadurch gekennzeichnet, dass** der oder jeder Träger (34) ein vorderes Ende (41) und ein hinteres Ende (42) aufweist, wobei das Gerüst (36) nach oben in die Nähe eines der Enden (41, 42) vorspringen kann, wobei die Vorhaltemittel (22) in der Nähe des anderen der Enden (41, 42) angeordnet sind.

6. Anordnung (10) nach einem der vorhergehenden Ansprüche, **dadurch gekennzeichnet, dass** der Rahmen (16) einen Schwerpunkt aufweist, der sich nach hinten und abseits des oder jedes unteren Trägers (34) erstreckt.

7. Anordnung (10) nach einem der vorhergehenden Ansprüche, **dadurch gekennzeichnet, dass** sie für die oder jede Durchlassöffnung (40A) ein Befestigungsorgan (24) aufweist, das in die Durchlassöffnung (40A) eingreift und in dem Boden (12) befestigt ist.

8. Sitzrahmen (16) für Kraftfahrzeug, vom Typ umfassend ein oberes Traggerüst (36) für eine Sitzfläche und mindestens einen unteren Gerüstträger (34), wobei der untere Träger (34) für die Befestigung an einem Boden (12) des Kraftfahrzeugs vorgesehen ist und mindestens eine Öffnung (40A) für den Durchlass eines Organs (24) zur Befestigung des unteren Trägers (34) in dem Boden (12) aufweist,
umfassend mindestens ein Einrastorgan (62), das mit dem unteren Träger (34) fest verbunden ist und für die Aufnahme in einem Aufnahmedurchlass (64), der in dem Boden (12) ausgebildet ist, vorgesehen ist, um den Rahmen (16) auf dem Boden (12) in Position zu halten, wenn ein Befestigungsorgan (24) in jeder Durchlassöffnung (40A) nicht vorhanden ist,
**dadurch gekennzeichnet, dass** er einen Ring, der einen mittigen Schlitz festlegt, der sich der Durchlassöffnung für das Befestigungsorgan gegenüber erstreckt, und eine seitliche Öse (70B) umfasst, wobei das Einrastorgan (62) in Querrichtung abseits von der Achse des Ringes (68) über die seitliche Öse (70B) vorspringt.

9. Verfahren zur Montage einer Innenanordnung (10) für ein Kraftfahrzeug, das die folgenden Schritte umfasst:
- Bereitstellen eines Bodens (12) eines Kraftfahrzeugs und eines Sitzrahmens (16), wobei der Rahmen (16) Folgendes aufweist:
- ein oberes Traggerüst (36) für eine Sitzfläche (18),
- mindestens einen unteren Gerüstträger (34), der für die Befestigung auf dem Boden (12) vorgesehen ist und mindestens eine Öffnung (40A) für den Durchlass eines Organs (24) zur Befestigung des Trägers (34) in dem Boden (12) aufweist,
- Bereitstellen von Mitteln (22) zum Vorhalten des Rahmens (16) in fest verbundener Position vor seiner Befestigung auf dem Boden (12), wobei die Vorhaltemittel (22) mindestens ein Einrastorgan (62), das mit einem (34) von dem unteren Träger (34) und dem Boden (12) fest verbunden ist, und einen Aufnahmedurchlass (64) für das oder jedes Einrastorgan (62) umfassen, der in dem anderen (12) von dem unteren Träger (34) und dem Boden (12) ausgebildet ist,
**dadurch gekennzeichnet, dass** die Vorhaltemittel (22) einen Ring, der einen mittigen Schlitz festlegt, der sich der Durchlassöffnung für das Befestigungsorgan gegenüber erstreckt, und eine seitliche Öse (70B) umfassen, wobei das Einrastorgan (62) in Querrichtung abseits von der Achse des Ringes (68) über die seitliche Öse vorspringt,
- Aufbringen des unteren Trägers (34) auf dem Boden (12);
- Eingreifen des oder jedes Einrastorgans (62) in einen Aufnahmedurchlass (64), wenn ein Befestigungsorgan (24) in jeder Durchlassöffnung (40A) nicht vorhanden ist; und anschließend
- Befestigen eines Befestigungsorgans (24) durch die oder jede Durchlassöffnung (40A) und den Boden (12) hindurch.
